# EUROPEAN PATENT SPECIFICATION

(11) **EP 0 616 923 B1**
(45) Date of publication and mention of the grant of the patent: **09.04.1997**
(21) Application number: 93119999.6
(22) Date of filing: 10.12.1993
(51) Int. Cl.: B60R 1/06

(54) **Electrically foldable outer rearview mirror for a motor vehicle**
Elektrisch klappbarer Aussenspiegel für ein Kraftfahrzeug
Rétroviseur extérieur rabattable électriquement pour un véhicule automobile

(30) Priority: 24.03.1993 JP 19095/93 U
(43) Date of publication of application: 28.09.1994
(73) Proprietor: MURAKAMI KAIMEIDO CO., LTD, Shizuoka 422 (JP)
(72) Inventor: Mochizuki, Toshihiro, Shizuoka-ken, 426 (JP); Iwanabe, Naoto, Shizuoka-ken, 426 (JP)
(74) Representative: Riederer Freiherr von Paar zu Schönau, Anton

(56) References cited:
- EP-A- 0 331 741
- EP-A- 0 519 115
- EP-A- 0 587 994

## Description

### Background of the Invention

The present invention relates to a mechanism for folding a mirror body of an electrically powered foldable outer rearview mirror for a motor vehicle, especially to a folding mechanism for the mirror body having an improved stability and reliability.

Outer rearview mirrors for motor vehicles are known to be mounted protruding from the vehicle side, and are designed to be foldable so as not to stand in the way of parking the vehicle in the garage or the like.

A foldable outer rearview mirror corresponding to the preamble of claim 1 is known from EP-A-0331741. Therein, the flange portion of the shaft has circular recesses, and the bottom portion of the frame comprises a space housing a compression spring and a ball resiliently engaged in the recess when the mirror is in its normal state or in its backward state.

Also a system disclosed in Published Japanese Patent Application Hei 2-290754 comprises a shaft, a mirror housing rotatably supported on the shaft and a clutch means controlling the rotation of the mirror housing. The shaft includes at its bottom part a flange portion and protruding from the flange portion a cylindrical portion, a pair of arc-shaped grooves being provided in the flange portion surface opposite to the cylindrical portion. A bracket is provided at the bottom of the mirror housing, and the surface where the mirror body is rotated and supported and a pair of semi-spherical recesses are provided on the undersurface of this bracket. Balls are retained in the semi-spherical recesses and are engaged with the arc-shaped grooves provided in the fixed surface of the flange to rotate the mirror housing around the shaft. The mirror housing is rotated by a driving force transmission means as a motor and a gear or the like. The arc-shaped groove has certain steps, i. e. depth differences, to terminate the movement of the balls. In this system, when the motor is operated to rotate the mirror housing to the backward position, the balls approach the one step of the arc-shaped groove and the motor is electrically cut off just before each ball contacts the step. The driving force transmission means as gears or the like has back-lash so as not to halt the rotation of the mirror housing simultaneously with the stop of the motor operation, so that the mirror housing is inertially further rotated until the balls contact the steps. Also when the mirror housing is rotated to the normal position, the motor is electrically cut off just before each ball contacts the other step of the arc-shaped groove to further rotate the mirror housing inertially so that balls contact the steps to halt the rotation of the mirror housing. When the rearview mirror contacts an obstruction, the balls are rotated on the fixed surface extending between the steps to locate the mirror housing at the forward position.

In place of breaking the electric power supply to the motor just before the balls approach the steps, a method of connecting a PTC (Positive Thermal Coefficience) element with the electric power supply line of the motor to control the motor operation is disclosed in Published Japanese Utility Model Application No. Hei 4-76196. The PTC element has a characteristic that the resistance rapidly increases with a certain temperature range of the line so that the temperature raise of the electric power supply line is detected when the balls contact the steps, to control the operation of the motor.

The conventional systems for automatically folding the outer rearview mirror suffer from the following drawbacks:
1. The movements to the backward position and the normal position of the mirror housing being stopped by the resilient engagement of the ball in the recesses, or by contacting the pair of balls with the steps of the arc-shaped grooves, it is difficult to achieve an even contact condition of the balls with the recess or the steps even though the motor operation is stopped and the back-lash of the driving force transmission means is set aside all together, and chattering occurs at the mirror housing position.
2. The arc-shaped groove is formed in a recess shape in the fixed surface, which permits water and foreign substance such as dust or the like to settle easily therein so that sometimes by inaccuracy of the rotation characteristic the balls cannot slide smoothly to stop the rotation of the mirror housing, and further the stop position of the mirror housing is changed.
3. The temperature of the electric power supply line being detected by the PTC element to control the motor operation, the motor is still supplied with electric power during the raise of the temperature for a long time, which is caused by the delay from the motor load increasing until the certain temperature raising of the electric power supply line. The mirror housing is inclined on the fixed surface when the balls start to travel between the steps.

### Summary of the Invention

It is an object of the present invention to provide an electrically powered foldable outer rearview mirror for a motor vehicle in which the position of the mirror housing is stopped while preventing it from chattering at the folded, i. e. backward position and at the erected, i. e. normal position; the arc-shaped groove is to be prevented from being disturbed with external substance, and the motor operation is to be halted simultaneously when the balls are being positioned at the steps of the arc-shaped groove so as not to incline the mirror housing.

According to the present invention, the electrically powered foldable outer rearview mirror comprises: a base, a shaft mounted on the base and having a flange portion and a cylindrical portion which is provided on the flange portion and a frame engaged to rotate about the cylindrical portion and having a bottom portion, the flange portion of the shaft on one hand, and the bottom portion of the frame on the other hand, comprising a slide surface and a protruding sliding portion which surface contacts the slide surface to have the frame sliding smoothly around the cylindrical portion; and is characterized in that the frame at the bottom portion has an arc-shaped groove and a plate stopper element including a pair of recess portions which have steps symmetric with reference to the cylindrical portion of the shaft, and the flange portion of the shaft has a shaft stopper element which is loosely engaged in the arc-shaped groove of the frame and a pair of semi-spherical concave hollows wherein a ball is each retained, thereby determining the frame rotating positions: the normal state in which one of the steps of each recess portion of the plate stopper element contacts the respective ball, and the backward state in which the shaft stop element contacts one of the groove edges of the arc-shaped groove. Although it is not so mounted in the present embodiment, it is possible to mount the slide portion together with the frame or to fix it by a srew or the like. The position of the elements: sliding portion and slide surface, mentioned at the frame and at the flange portion, respectively, could as well be exchanged.

The shaft preferably includes a protruded shaft rib provided coaxially to the cylindrical portion, and the frame groove is provided in the frame so as to loosely engage the shaft rib, so that any external substance is prevented from distributing therein.

### Brief Description of the Drawing

The objects, features and advantages of the present invention will now be illustrated in more detail by the following detailed description, reference being made to the accompanying drawing in which:
Figure 1 is a partially cut-away cross-sectional view of an outer rearview mirror according to the invention;
Figure 2 is a perspective upside-down view of the bottom side of a plate stopper element of the rearview mirror of Fig. 1;
Figure 3(a) is a detailed cross-sectional view of a contacting condition of the plate stopper element, a ball and a shaft of the rearview mirror in a normal position; and
Figure 3(b) is a detailed cross-sectional view as in Fig. 3(a), of the rearview mirror in a backward position.

### Description of the Preferred Embodiment

The structure of an electrically powered foldable outer rearview mirror assembly is as follows:

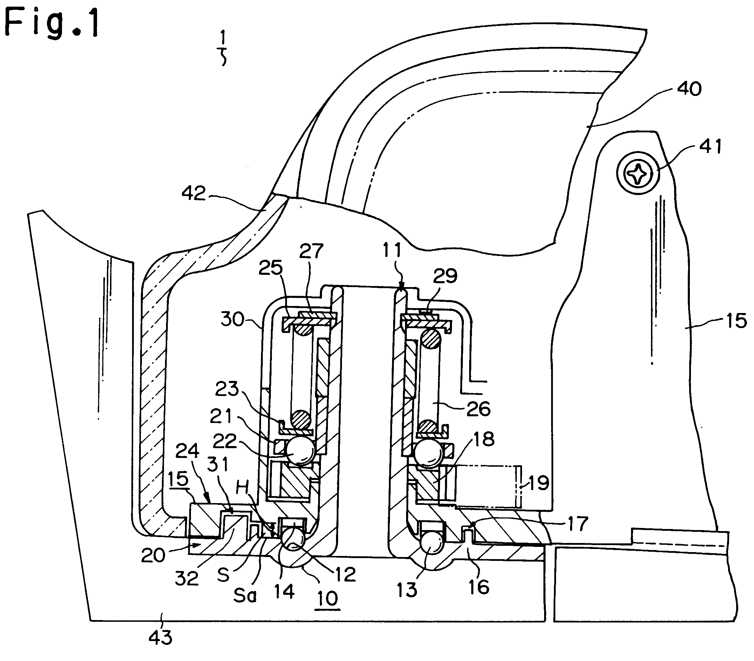

An electrically powered foldable outer rearview mirror assembly for a motor vehicle according to the invention is shown in Fig. 1.

In the electrically powered foldable outer rearview mirror assembly 1 according to the invention, a shaft 10 is fixed on a base 43 and includes a flange portion 20 constituting a root portion of the shaft, and a cylindrical portion 11 which is provided on the flange portion 20. A frame 15 is engaged with the cylindrical portion 11, and an outer plate 30 is attached to the frame 15. A mirror body 42 is fixed to the frame 15 by a screw 41 or the like.

A sliding portion S which has a certain height H, an annular-shaped frame groove 17 and an arc-shaped groove 31 are provided on the bottom portion 24 of the frame 15. The groove 17 is provided coaxial with the cylindrical portion 11 of the shaft 10 and a plate stopper element 14 is fixed at the bottom portion 24 of the frame 15.

A slide surface Sa, a rib 16, a shaft stopper element 32 and semi-spherical concave hollows 12 are provided on the flange portion 20 of the shaft 10. The sliding portion S surface contacts for sliding the slide surface Sa and the frame groove 17 is loosely engaged with the rib 16. The shaft stopper element 32 is loosely engaged between the side walls of the arc-shaped groove 31 and balls 13 are retained in the semi-spherical concave hollows 12.

A rotating means for the mirror body is fixed on the frame 15 and a gear means 19 which is part of rotating means engages with a gear means 18. The gear means 18 is provided on the cylindrical portion 11 of the shaft 10 and is determined to rotate around said cylindrical portion 11 if not engaged by a ball clutch means.

Balls 22 are guided by a ball guide element 21 to contact with the gear means 18 and are energized by a spring element 26 through a lower washer 23 to the direction of the flange portion 20. The other end of the spring element 26 is determined at its position by an upper washer 25 and a plate element 27.

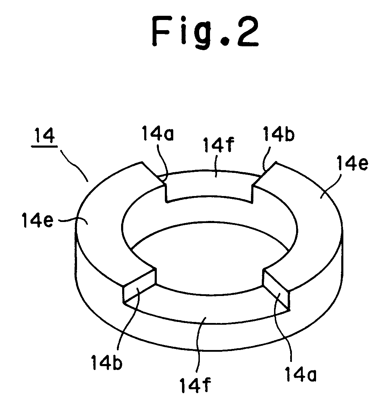

The plate stopper element 14 is illustrated upside-down by Fig. 2 in which the balls are retained on the upper surface 14e of the stopper element 14. A pair of symmetric recessed portions 14f have steps 14a, 14b, respectively.

### Locating Mechanism:

In the electrically powered foldable outer rearview mirror assembly 1 described hereinbefore, a locating mechanism will now be described in detail according to Fig.s 3(a) and 3(b).

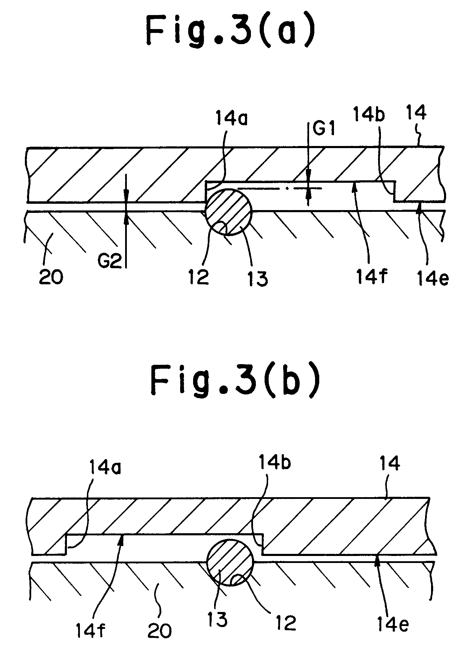

Balls 13 are provided in the hollows 12 to contact the shaft 10 with the annular plate stopper element 14. Fig. 3(a) and 3(b) are a cross-sectional view of the contacting condition of the plate stopper element 14, balls 13 and the flange 20 of the shaft 10. Fig. 3(a) shows that the mirror body 42 is positioned in the normal state when the balls 13 contact the one, i. e. 14a, of the steps 14a, 14b. Fig. 3(b) shows that the mirror body 42 is positioned in the backward state when the balls 13 nearly contact the other one, i. e. 14b, of the steps 14a, 14b.

The motor which is part of the rotating means is engaged with the gear means 19 and is actuated to rotate the gear means 18 while the gear means 18 is supported nonrotatably on the cylindrical portion 11 by the engagement of the ball clutch means which is formed by the balls 22 energized by spring element 26 and concave hollows on an upper surface of the gear means 18 so that the gear means 19 engaging the nonrotating gear means 18 is rotated on its axis and the rotation thereof is converted to the rotating actuation or revolution of the frame 15 around the shaft 10.

The mirror body 42 is positioned in its normal state, that is the steps 14a of the plate stopper element 14 contact the balls 13, and then the motor is electrically cut off to halt the rotation of the frame 15. When the mirror body 42 is positioned in its backward state, the shaft stopper element 32 contacts the step of the arc-shaped groove 31 and then the motor is electrically cut off to halt the rotation of the frame 15. When the outer rearview mirror contacts an external obstacle - which happens in the normal state but does not happen in the backward state -, the balls 13 lift the plate stopper element 14 through the step 14a to slide on the upper surface 14e of the plate stopper element 14.

A frame position detective means 29 detects that the balls 13 contact the step 14a or the shaft stopper element 32 contacts the step of the arc-shaped groove 31 so that the motor is stopped. An optical sensor or the like is used for the frame position detective means 29 capable of stopping the motor with a time lag to be disregarded. It is also possible to detect and control the motor rotation by the optical sensor so that the balls 13 contact the step 14a or the like and the motor is stopped.

As shown by Fig.s 3(a) and 3(b), clearance G1 and G2 are provided between the top of balls 13 and the recesses 14f of the plate stopper element 14 and between the upper surface 14e of the plate stopper element 14 and the flange 20 of the shaft 10, respectively. The slide surface Sa surface contacts and slides with the sliding portion S of the shaft 10 to hold the clearances G1, G2. Any friction between the balls 13 and the plate stopper element 14 is prevented to avoid the abrasion of the plate stopper element 14.

The contact between the sliding portion S and the slide surface Sa provides the bearing surface so that the frame 15 is improved by the good stability in preventing from chattering. The inclination of the frame 15 is prevented when the balls 13 contact and extend through the steps 14a.

The rib 16 is provided protruding from the shaft 10 and the frame groove 17 is loosely engaged therewith so that water and foreign substance such as dust or the like is prevented from disturbing thereinto to achieve the stable rotation of the frame 15.

## Claims

1. An electrically powered foldable outer rearview mirror comprising:
a base (43);
a shaft (10) mounted on the base (43) and having a flange portion (20) and a cylindrical portion (11) which is provided on the flange portion (20); and
a frame (15) engaged to rotate about the cylindrical portion (11) and having a bottom portion (24);
the flange portion (20) of the shaft (10) on one hand, and the bottom portion (24) of the frame (15) on the other hand, comprising a slide surface (Sa) and a protruding sliding portion (S) which surface contacts the slide surface (Sa) to have the frame (15) sliding smoothly around the cylindrical portion (11);
characterized in that
the frame (15) at the bottom portion (24) has an arc-shaped groove (31) and a plate stopper element (14) including a pair of recess portions which have steps (14a, 14b) symmetric with reference to the cylindrical portion (11) of the shaft (10); and
the flange portion (20) of the shaft (10) has a shaft stopper element (32) which is loosely engaged in the arc-shaped groove (31) of the frame (15) and a pair of semi-spherical concave hollows (12) wherein a ball (13) is each retained;
thereby determining the frame rotating positions: the normal state in which one of the steps (14a) of each recess portion of the plate stopper element (14) contacts the respective ball (13), and the backward state in which the shaft stop element (32) contacts one of the groove edges of the arc-shaped groove (31).

2. The electrically powered foldable outer rearview mirror as defined in claim 1, wherein a certain height is provided to maintain a certain clearance (G1, G2) between the top of the balls (13) and the recess portions of the plate stopper element (14) and between an upper surface (14e) of the plate stopper element (14) and the flange portion (20) of the shaft (10).

3. The electrically powered foldable outer rearview mirror as defined in claim 1 or 2, wherein the shaft (10) includes a protruded shaft rib (16) coaxially provided with the cylindrical portion (11) and loosely engaged with a frame groove (17).

## Patentansprüche

1. Elektrisch angetriebener klappbarer Außenrückblickspiegel, mit:
einer Basis (43);
einer Achse (10), die auf der Basis (43) montiert ist und einen Flanschteil (20) und einen zylindrischen Teil (11), der auf dem Flanschteil (20) sitzt, aufweist; und
einem Rahmen (15), an dem zu seiner Verdrehung um den zylindrischen Teil (11) angegriffen wird und der einen Fußteil (24) aufweist;
wobei der Flanschteil (20) der Achse (10) einerseits und der Fußteil (24) des Rahmens (15) andererseits umfassen: eine Gleitfläche (Sa), und einen vorstehenden Gleitteil (S), der dazu in Flächenkontakt mit der Gleitfläche (Sa) steht, daß der Rahmen (15) glatt um den zylindrischen Teil (11) gleitet;
dadurch gekennzeichnet, daß
der Rahmen (15) am Fußteil (24) eine bogenförmige Nut (31) und ein Plattenanschlagelement (14) hat, das zwei zurückgesetzte Teile mit Stufen (14a, 14b) umfaßt, symmetrisch hinsichtlich des zylindrischen Teils (11) der Achse (10); und
der Flanschteil (20) der Achse (10) ein Achsenanschlagelement (32) aufweist, das lose in die bogenförmige Nut (31) des Rahmens (15) eingreift, und zwei halbkugelförmige konkave Mulden (12) aufweist, in denen jeweils eine Kugel (13) enthalten ist;
wodurch die Rahmendrehpositionen bestimmt sind: die normale Position, in der eine der Stufen (14a) jedes der zurückgesetzten Teile des Plattenanschlagelements (14) die betreffende Kugel (13) kontaktiert, und die zurückgenommene Position, in der das Achsenanschlagelement (32) einen der Nutränder der bogenförmigen Nut (31) kontaktiert.

2. Elektrisch angetriebener klappbarer Außenrückblickspiegel nach Anspruch 1, bei dem eine gewisse Höhe geschaffen ist, um einen gewissen Abstand (G1, G2) zwischen der Oberseite der Kugeln (13) und den zurückgesetzten Teiles des Plattenanschlagelements (14), sowie zwischen einer Oberseite (14e) des Plattenanschlagelements (14) und dem Flanschteil (20) der Achse (10) aufrechtzuerhalten.

3. Elektrisch angetriebener klappbarer Außenrückblickspiegel nach Anspruch 1 oder 2, bei dem die Achse (10) einen vorstehenden Achsensteg (16) umfaßt, der koaxial zum zylindrischen Teil (11) angeordnet ist und lose in eine Nut (17) des Rahmens eingreift.

## Revendications

1. Rétroviseur extérieur rabattable par commande électrique, comprenant:
un socle (43):
un arbre (10) monté sur le socle (43) et comprenant une partie formant bride (20) et une partie cylindrique (ii) qui est disposée sur la partie formant bride (20): et
un cadre (15) qui est agencé de manière à tourner autour de la partie cylindrique (11) et qui comporte une partie inférieure (24);
la partie formant bride (20) de l'arbre (10) d'une part et la partie inférieure (24) du cadre (15) d'autre part comportant respectivement une surface de glissement (Sa) et une saillie glissante (S) qui est en contact superficiel avec la surface de glissement (Sa), de telle sorte que le cadre (15) glisse sans à-coups autour de la partie cylindrique (11);
caractérisé en ce que
le cadre (15) présente, dans sa partie inférieure (24), une rainure (31) en forme d'arc et un élément (14) d'arrêt de plaque comportant une paire de parties en creux qui définissent des gradins (14a,14b) symétriques par rapport à la partie cylindrique (11) de l'arbre (10); et
la partie formant bride (20) de l'arbre (10) comporte un élément (32) d'arrêt d'arbre qui s'engage avec du jeu dans la rainure (31) en forme d'arc du cadre (15) et une paire de creux concaves hémisphériques (12) dans chacun desquels une bille (13) est retenue;
ce qui détermine les positions de rotation du cadre: la situation normale dans laquelle l'un des gradins (14a) de chaque partie en creux de l'élément (14) d'arrêt de plaque est en contact avec la bille (13) respective, et la situation arrière dans laquelle l'élément (32) d'arrêt d'arbre est en contact avec l'un des bords de la rainure (31) en forme d'arc.

2. Rétroviseur extérieur rabattable par commande électrique selon la revendication 1, dans lequel une certaine hauteur est prévue pour maintenir un certain jeu (G1,G2) entre le haut des billes (13) et les parties en creux de l'élément (14) d'arrêt de plaque et entre la surface supérieure (14e) de l'élément (14) d'arrêt de plaque et la partie formant bride (20) de l'arbre (10).

3. Rétroviseur extérieur rabattable par commande électrique selon la revendication 1 ou 2, dans lequel l'arbre (10) comporte une nervure d'arbre saillante (16) disposée coaxialement avec la partie cylindrique (11) et s'engageant avec du jeu dans une rainure (17) du cadre.
